# DEMANDE DE BREVET EUROPEEN

(11) **EP 4 632 646 A1**
(43) Date de publication de la demande: **15.10.2025**
(21) Numéro de dépôt: 25169846.0
(22) Date de dépôt: 10.04.2025
(51) Int. Cl.: G06Q 10/0639

(54) **PROCÉDÉ DE DÉTERMINATION D'UN NIVEAU DE FATIGUE STATISTIQUE RELATIF À UNE POPULATION D'OPÉRATEURS ET SYSTÈME DE DÉTERMINATION ASSOCIÉ**

(30) Priorité: 12.04.2024 FR 2403807
(71) Demandeur: THALES, 92190 Meudon (FR)
(72) Inventeur: DURIEUX, Florence, 33700 MERIGNAC (FR); BERTHELOT, Bastien, 33700 MERIGNAC (FR); IBANEZ, Vincent, 33700 MERIGNAC (FR)
(74) Mandataire: Lavoix

(57) **Abrégé**

La présente invention concerne un procédé de détermination d'un niveau de fatigue statistique, comprenant les étapes suivantes :
- acquisition (110) d'une pluralité de données d'évaluation des opérateurs déterminées à partir de données physiologiques des opérateurs ;
- acquisition (120) d'une pluralité de données de contexte général ;
- acquisition (130) d'une pluralité de données de contexte particulier ;
- prétraitement (150) de l'ensemble des données acquises ;
- acquisition (170) d'une plage de temps pour détermination du niveau de fatigue statistique et acquisition (170) d'un critère de filtrage, le critère de filtrage étant basé sur les données de contexte général et/ou les données de contexte particulier ;
- détermination (190) à partir de l'ensemble des données prétraitées d'un niveau de fatigue statistique selon le critère de filtrage acquis sur la plage de temps acquis.

## Description

La présente invention concerne un procédé de détermination d'un niveau de fatigue statistique relatif à une population d'opérateurs.

La présente invention concerne également un système de détermination permettant de mettre en œuvre un tel procédé.

L'invention se situe dans le domaine technique de l'évaluation de la fatigue d'opérateurs notamment pour le domaine aéronautique. Dans ce domaine, l'invention permet d'améliorer la sécurité de vol.

L'invention reste toutefois utilisable dans tous les autres domaines où la gestion de la fatigue des opérateurs est un enjeu important. Ces domaines regroupent notamment ceux où une performance opérationnelle est nécessaire, tels que par exemple le domaine de transport, le nucléaire ou alors la médecine.

Dans l'état de la technique, la fatigue des opérateurs est généralement analysée lors de campagnes temporaires sur la base de questionnaires permettant de capturer la fatigue subjective ou alors sur la base de déclaration de fatigue individuelle.

Il existe également des évaluations objectives basées sur des modèles biomathématiques et destinées à lever des alertes ponctuelles et individuelles lorsque cela est nécessaire.

Ces deux modes de capture de la fatigue permettent uniquement de déduire une fatigue subjective qui peut être biaisée par une pression culturelle ou d'entreprise. En particulier, les opérateurs déclarant leur fatigue ont tendance à sous-estimer celle-ci.

D'autre part, les solutions existantes ne permettent pas d'obtenir des statistiques objectives et structurelles offrant des perspectives d'analyse de la fatigue selon des critères définis.

La présente invention a pour but de proposer un moyen d'évaluation de la fatigue de manière objective et cela tout en permettant de synthétiser la vue globale sur la fatigue pour planifier les missions des opérateurs.

À cet effet, l'invention a pour objet un procédé de détermination d'un niveau de fatigue statistique relatif à une population d'opérateurs, comprenant les étapes suivantes :
- acquisition d'une pluralité de données d'évaluation des opérateurs déterminées à partir de données physiologiques des opérateurs ;
- acquisition d'une pluralité de données de contexte général relatives au contexte général d'évaluation des opérateurs ;
- acquisition d'une pluralité de données de contexte particulier relatives au contexte particulier d'évaluation des opérateurs ;
- prétraitement de l'ensemble des données acquises ;
- acquisition d'une plage de temps pour détermination du niveau de fatigue statistique et acquisition d'un critère de filtrage, le critère de filtrage étant basé sur les données de contexte général et/ou les données de contexte particulier ;
- détermination à partir de l'ensemble des données prétraitées d'un niveau de fatigue statistique selon le critère de filtrage acquis sur la plage de temps acquis.

Suivant d'autres aspects avantageux de l'invention, le procédé comprend une ou plusieurs caractéristiques suivantes, prises isolément ou en combinaison suivant toutes les combinaisons techniquement possibles :
- une étape de transmission du niveau de fatigue statistique déterminé pour affichage par une interface d'affichage ;
- une étape de validation des données d'évaluation et des données de contexte général selon un ou plusieurs critères de validation prédéterminés ;
- le ou chaque critère de validation est choisi dans le groupe comprenant :
   - les données acquises sont relatives à une évaluation validée ;
   - les données acquises relatives à un opérateur identifié ;
   - les données acquises respectent une durée minimale de l'évaluation ;
   - les données acquises respectent une phase de collecte, chaque phase de collecte étant choisie parmi une phase initiale de collecte mise en œuvre avant la mission, une phase intermédiaire de collecte mise en œuvre pendant la mission et une phase finale de collecte mise en œuvre après la mission ;
- les données de contexte général comprennent au moins un type de données choisi dans le groupe comprenant :
   - données relatives à l'environnement de l'opérateur ;
   - données physiologiques de l'opérateur ;
- le prétraitement des données de contexte général comprend la mise en œuvre d'au moins l'un des éléments choisi dans le groupe comprenant :
   - définition de la localisation de l'évaluation ;
   - définition de l'heure locale ;
   - identification d'une session matinale, normale ou tardive ;
   - identification du poste occupé par l'opérateur ;
   - extrapolation des informations relatives au sommeil de l'opérateur ;
- les données d'évaluation comprennent au moins un type de données choisi dans le groupe comprenant :
   - niveau de fatigue objectif de l'opérateur ;
   - niveau de fatigue subjectif de l'opérateur ;
- le prétraitement des données d'évaluation comprend la mise en œuvre d'au moins l'un des éléments choisi dans le groupe comprenant :
   - normalisation du niveau de fatigue objectif ;
   - normalisation du niveau de fatigue subjectif ;
   - identification d'une classe de fatigue objective selon le niveau de fatigue objectif ;
   - identification d'une classe de fatigue subjective selon le niveau de fatigue subjectif ;
- les données de contexte particulier comprennent au moins un type de données choisi dans le groupe comprenant :
   - données relatives à la mission à effectuer par l'opérateur ;
   - données relatives à la (aux) mission(s) effectuée(s) par l'opérateur ;

   - données opérationnelles relatives à des activités effectuées par l'opérateur autres qu'une mission ;
- le prétraitement des données de contexte particulier comprend la détermination d'au moins l'un des éléments choisi dans le groupe comprenant :
   - vol(s) opéré(s) ;
   - données spécifiques aux sessions d'entrainement ;
   - période du jour de la mission ;
   - type d'avion ;
   - charge de travail ;
   - degré de perturbations dans l'activité ;
   - activités dans les jours précédant l'évaluation ;
   - retards ou perturbations lors de(s) mission(s) ;
   - routes opérées ;
- une étape de corrélation de données acquises/déterminées lors de différentes phases de collecte relatives à un même opérateur, chaque phase de collecte étant choisie parmi une phase initiale de collecte mise en œuvre avant la mission, une phase intermédiaire de collecte mise en œuvre pendant la mission et une phase finale de collecte mise en œuvre après la mission ;
   avantageusement, l'étape de corrélation comprenant l'identification d'un même identifiant de l'opérateur pour au moins deux identifiants de session associés auxdites données acquises/déterminées, correspondant à des phases de collecte différentes.
- une étape de détermination d'un nombre d'opérateurs et/ou d'un nombre de routes et/ou d'un nombre d'évaluations correspondant aux données acquises utilisables pour déterminer le niveau de fatigue statistique selon ce critère de filtrage ;
- l'étape de détermination du niveau de fatigue statistique comprend en outre la détermination d'un indicateur de confiance associé au niveau de fatigue statistique déterminé, l'indicateur de confiance étant déterminée en fonction dudit nombre d'opérateurs et/ou de routes et/ou d'évaluations.

L'invention a également pour objet un système de détermination d'un niveau de fatigue statistique relatif à une population d'opérateurs, comprenant des moyens techniques configurés pour mettre en œuvre le procédé tel que défini précédemment.

Ces avantages et caractéristiques de l'invention seront mieux compris à la lecture de la description qui va suivre, donnée uniquement à titre d'exemple non limitatif, et faite en référence aux dessins annexés sur lesquels :
- [Fig 1] la figure 1 est une vue schématique d'un système de détermination selon l'invention ;
- [Fig 2] la figure 2 est un organigramme d'un procédé de détermination selon l'invention, le procédé étant mis en œuvre par le système de la figure 1 ;
- [Fig 3] [Fig 4] [Fig 5] les figures 3 à 5 sont des vues schématiques illustrant la mise en œuvre du procédé de la figure 2.

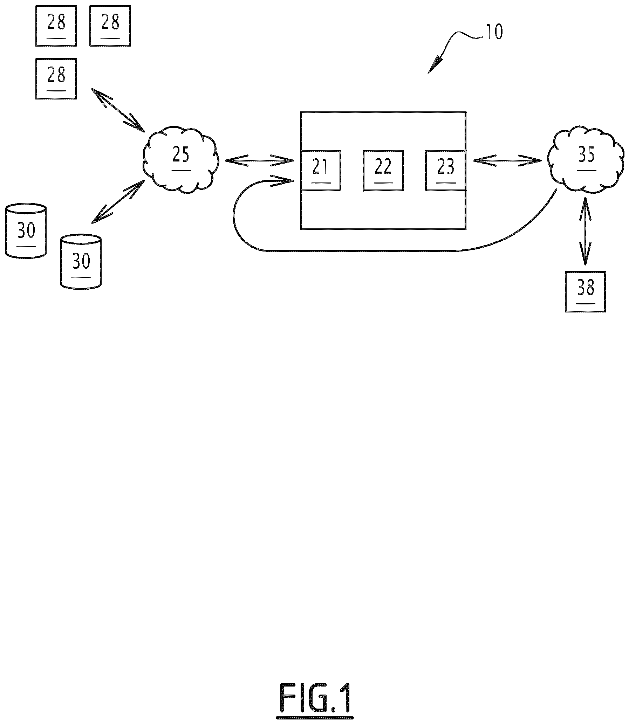

On a en effet illustré sur la figure 1 un système de détermination 10 d'un niveau de fatigue statistique relatif à une population d'opérateurs.

La population d'opérateurs inclut plus que deux opérateurs effectuant des tâches similaires lors des missions de natures similaires. Par exemple, la population d'opérateurs inclut quelques dizaines d'opérateurs. Dans certains exemples, la population d'opérateurs inclut quelques centaines d'opérateurs, voire plus. La population d'opérateurs peut varier en fonction de critères de filtrage qui seront expliqués plus en détail par la suite.

Avantageusement, le système de détermination 10 est utilisable dans le domaine aéronautique. Dans un tel cas, chaque opérateur fait partie du personnel navigant, notamment du personnel navigant commercial. Selon d'autres exemples, chaque opérateur fait partie des opérateurs de planification de vols ou des opérateurs de maintenance ou des opérateurs de contrôle d'aéronef ou des contrôleurs aériens.

Avantageusement, chaque opérateur est un pilote apte à piloter un aéronef.

Par aéronef, on entend tout engin volant pilotable à partir du cockpit de celui-ci, comme cela est le cas par exemple d'un avion ou d'un hélicoptère, ou alors à distance de celui-ci, comme cela est le cas par exemple d'un drone.

De manière générale, la notion de l'opérateur peut s'appliquer à toute autre personne effectuant une mission critique, par exemple dans le domaine de transport (ferroviaire ou poids lourd par exemple) ou dans le domaine nucléaire ou spatial, ou dans la médecine.

Comme indiqué précédemment, chaque opérateur effectue une mission qui est déterminée par le domaine de son activité.

En particulier, la mission de l'opérateur comprend une pluralité de tâches définies selon les compétences de l'opérateur.

Lorsque l'opérateur est un pilote d'aéronef, sa mission consiste généralement à un pilotage de l'aéronef d'un point de départ à un point de sa destination.

En référence à la figure 1, le système de détermination 10 comprend un module d'entrée 21, un module de traitement 22 et un module de sortie 23.

Chacun de ces modules 21 à 23 se présente par exemple au moins partiellement sous la forme d'un logiciel et/ou alors d'un circuit logique programmable tel qu'un circuit FPGA (« Field Programmable Gate Array »).

Lorsque ces modules se présentent au moins partiellement sous la forme de logiciels, le système de détermination 10 comprend en outre un processeur permettant de mettre en œuvre ces logiciels et une mémoire vive permettant de stocker au moins temporairement les données à traiter ou alors les données traitées par ces différents modules. Le système de détermination 10 peut également comprendre une mémoire non volatile permettant de stocker au moins certaines données d'entrée ou alors des données de sortie, au moins de manière temporaire.

Le module d'entrée 21 est configuré pour recevoir des données issues de systèmes externes.

Dans l'exemple de la figure 1, les systèmes externes comprennent notamment une pluralité de systèmes transportables 28 d'évaluation de la fatigue ainsi qu'une ou plusieurs base(s) de données 30.

Chaque système transportable 28 d'évaluation de la fatigue permet de générer des pluralités de données d'évaluation relatives à la fatigue des différents opérateurs.

En particulier, chacun des systèmes transportables 28 d'évaluation permet de générer les données d'évaluation des opérateurs à partir des données physiologiques de ces opérateurs.

Les données physiologiques de l'opérateur présentent tout type de données permettant de caractériser l'état physique de l'opérateur. Ces données physiologiques sont avantageusement acquises juste avant la mission lors d'une phase initiale de collecte, ou pendant la mission lors d'une phase intermédiaire de collecte, ou alors juste après la mission lors d'une phase finale de collecte.

Avantageusement, les données physiologiques de l'opérateur comprennent au moins un type de données choisi dans le groupe comprenant :
- des images ou des vidéos de l'opérateur ;
- un rythme cardiaque ;
- une pression artérielle ;
- une inspiration d'oxygène ;
- une fréquence de respiration ;
- une amplitude de respiration ;
- une sudation ;
- une saturation en oxygène ;
- un taux de déshydratation.

Pour acquérir les données physiologiques, chaque système transportable 28 d'évaluation comprend une pluralité de capteurs. Alternativement ou avantageusement, chaque système transportable 28 d'évaluation est connecté directement ou indirectement à une pluralité de capteurs disposés par exemple dans le poste de travail de l'opérateur. Par exemple, ces capteurs sont disposés de manière fixe et/ou amovible dans le cockpit de l'aéronef piloté par l'opérateur.

En particulier, la pluralité de capteurs comprend tout capteur permettant d'acquérir les données physiologiques de l'opérateur.

Par exemple, la pluralité de capteurs comprend une caméra configurée pour acquérir des images de l'opérateur et un capteur de rythme cardiaque permettant de mesurer le rythme cardiaque de l'opérateur.

La caméra est par exemple orientée vers l'opérateur ou présente des moyens permettant de l'orienter selon la position de l'opérateur.

Le capteur de rythme cardiaque de l'opérateur est configuré par exemple pour être positionné autour d'un poignet de l'opérateur.

À cet effet, le capteur de rythme cardiaque présente par exemple une montre connectée ou un bracelet susceptible d'être fixé(e) sur le poignet de l'opérateur et une partie sensible qui est destinée à mesurer le rythme cardiaque de l'opérateur lorsque le bracelet est fixé sur son poignet.

La mesure du rythme cardiaque s'effectue par exemple par la partie sensible, par la technique appelée photopléthysmographie, dit PPG. Alternativement, la partie sensible est configurée pour effectuer la mesure du rythme cardiaque à partir d'une analyse de réponse électrique par le poignet de l'opérateur ou par analyse de signaux de radar se propageant dans le poignet de l'opérateur.

Dans certains exemples, le capteur de rythme cardiaque est configuré pour mesurer d'autres paramètres physiologiques de l'opérateur tels que (liste non exhaustive) la pression artérielle, l'inspiration de l'oxygène, la fréquence de respiration, l'amplitude de respiration la sudation, le taux de déshydratation.

Pour la saturation en oxygène, le capteur de rythme cardiaque est par exemple configuré pour émettre en direction de la peau de l'opérateur et recevoir un signal lumineux comprenant au moins deux longueurs d'onde. Une première longueur d'onde correspondant à une longueur d'onde absorbée par les globules rouges saturés, une deuxième longueur d'onde correspondant à une longueur d'onde absorbée par les globules rouges non saturés. Pour déterminer la saturation en oxygène, le capteur de rythme cardiaque est alors configuré pour comparer l'intensité lumineuse reçue en réponse à chacune des deux longueurs d'onde.

De manière générale, le capteur de rythme cardiaque peut se présenter sous la forme d'une montre connectée pour par exemple mesurer son rythme cardiaque.

Bien entendu, les fonctionnalités précitées du capteur de rythme cardiaque peuvent former des capteurs séparés.

Les données d'évaluation transmises par les systèmes transportables 28 d'évaluation comprennent avantageusement des niveaux de fatigue objectifs des opérateurs ayant utilisé ces systèmes 28.

De préférence, ces données d'évaluation comprennent en outre des niveaux de fatigue subjectifs de ces opérateurs.

En particulier, chaque niveau de fatigue objectif est déterminé au moins partiellement par le système transportable d'évaluation 28 à partir des données physiologiques de l'opérateur et éventuellement des données contextuelles. Dans certains exemples, les niveaux de fatigue objectifs sont déterminés par un ou plusieurs systèmes distants des systèmes transportables 28 d'évaluation à partir par exemple des données physiologiques des opérateurs transmises par ces systèmes 28. Ce ou ces systèmes distants peuvent former des serveurs.

Chaque niveau de fatigue subjectif de l'opérateur est saisi par l'opérateur lui-même via par exemple une interface du système transportable 28 d'évaluation correspondant.

De manière avantageuse, les systèmes transportables 28 sont aptes en outre à fournir des données de contexte général relatives au contexte général d'évaluation des opérateurs.

Ces données de contexte général comprennent au moins un type de données choisi dans le groupe comprenant :
- les données relatives à l'environnement de l'opérateur ;
- les données physiologiques de l'opérateur.

Les données relatives à l'environnement de l'opérateur sont par exemple des données décrivant l'environnement dans lequel l'évaluation de l'opérateur a été faite.

Les données physiologiques de l'opérateur sont relatives à l'opérateur lui-même et comprennent par exemple des données déterminées par les différents capteurs tels qu'expliqués précédemment.

Dans certains cas, ces données physiologiques comprennent également des données physiologiques saisies par l'opérateur via l'interface de communication du système transportable 28 d'évaluation correspondant. Ces données sont saisies par exemple par l'opérateur à la suite de différentes questions relatives à son état physiologique général tel que, par exemple, la durée de son sommeil, la quantité de sieste effectuée, les heures de ou des périodes de repos, etc.

Les données de contexte général sont par exemple liées aux données d'évaluation transmises par le système transportable 28 d'évaluation correspondant par un identifiant unique de session.

Autrement dit, cet identifiant unique de session permet d'associer les données d'évaluation déterminées par ce système 28 aux données de contexte général qui correspondent à ces données d'évaluation.

Cet identifiant unique de session peut par exemple être associé à un identifiant de l'opérateur dont les données d'évaluation sont utilisées. Pour ce faire, les données de contexte général peuvent inclure l'identifiant de cet opérateur. L'identifiant de l'opérateur peut éventuellement être anonymisé.

La ou les base(s) de données 30 permettent de fournir des données de contexte particulier. Ces données de contexte particulier comprennent au moins un type de données choisi dans le groupe comprenant :
- les données relatives à la mission à effectuer par l'opérateur ;
- les données relatives à la ou aux mission(s) effectuées par l'opérateur ;
- les données opérationnelles relatives à des activités effectuées par l'opérateur autres qu'une mission.

Ces données de contexte particulier correspondent par exemple au planning de vol effectué ou à effectuer par différents opérateurs.

Les données sur des activités autres qu'une mission effectuées par les opérateurs comprennent par exemple des données sur leurs activités physiques. Ces données sont par exemple issues d'une application de suivi sportif de l'opérateur ou de tout autre organisme s'occupant des activités des opérateurs.

Les activités effectuées par l'opérateur peuvent comprendre en outre par exemple des activités en vol ou au sol telles qu'entrainement, astreinte, maladie, etc.

La ou les base(s) de données 30 peuvent alors appartenir à la compagnie aérienne ou à toute autre organisme tiers qui stocke les données de contexte particulier telles que définies ci-dessus.

Le module de traitement 22 permet de traiter les données acquises par le module d'entrée 21 comme cela sera expliqué plus en détail par la suite.

Le module de traitement 22 permet en outre de générer des données de sortie qui sont transmises au module de sortie 23.

Le module de sortie 23 permet d'envoyer les données générées par le module de traitement 22 à tout système externe intéressé. Ce système externe est par exemple raccordé à ce module de sortie 23 via un réseau informatique global ou local 35.

Dans l'exemple de la figure 1, un tel système externe comprend par exemple une interface de communication 38 avec un utilisateur tel qu'un manager (i.e. par exemple *Safety Manager* en anglais) ou tout autre supérieur des opérateurs.

Cette interface de communication 38 comprend par exemple un moyen d'affichage tel qu'un écran et un moyen de saisie.

Ce moyen de saisie permet par exemple à l'utilisateur de saisir un critère d'affichage qui peut être également transmis au module d'entrée 21 pour être pris en compte dans les données de sortie transmises par le module de sortie 23.

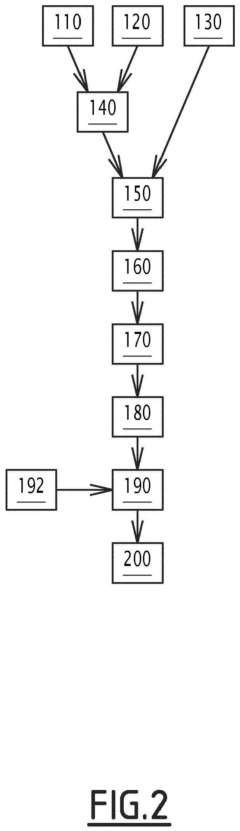

Le système de détermination 10 permet de mettre en œuvre un procédé de détermination 10 d'un niveau de fatigue et sera désormais décrit en référence à la figure 2 présentant un organigramme de ses étapes.

Il est considéré initialement que les systèmes transportables 28 d'évaluation ont généré des données physiologiques relatives à une population d'opérateurs. Ces données physiologiques sont utilisées par les systèmes transportables 28 et/ou d'autres systèmes distants pour générées des données d'évaluation.

Les données d'évaluation comprennent notamment les niveaux de fatigue objectifs/subjectifs de ces opérateurs.

De manière avantageuse, les données d'évaluation ont été générées suite à une ou plusieurs phases de collecte.

Comme indiqué précédemment, chaque phase de collecte est choisie parmi une phase initiale de collecte mise en œuvre avant la mission, une phase intermédiaire de collecte mise en œuvre pendant la mission et une phase finale de collecte mise en œuvre après la mission.

La phase initiale de collecte, appelée également check-in, comprend l'acquisition de données physiologiques et de données de mission relatives à l'opérateur correspondant et génère un niveau de fatigue objectif à partir de ces données.

La phase intermédiaire de collecte, appelée également on-duty, comprend une collecte de différents types de données telles que les données physiologiques de l'opérateur et des données relatives à la mission en cours. Cette collecte par exemple est effectuée par un dispositif distant du dispositif transportable d'évaluation. Un tel dispositif distant peut comprendre une montre connectée ou tout autre dispositif mobile porté par l'opérateur pendant la mission.

La phase finale de collecte, appelée également check-out, comprend la collecte de données générées pendant la mission ainsi que les données physiologiques de l'opérateur acquises par le système transportable d'évaluation 28 suite à la mission.

Dans certains modes de réalisation, la phase intermédiaire de collecte est optionnelle. Dans un tel cas, seules les phases initiale et finale de collecte sont mises en œuvres.

Il est également considéré qu'initialement les systèmes transportables 28 d'évaluation génèrent les données de contexte général associées aux données d'évaluation des opérateurs. Ces données de contexte général sont par exemple liées aux données d'évaluation de l'opérateur correspondant par un identifiant unique de session tel que défini précédemment.

Enfin, il est également considéré que la ou les base(s) de données 30 contiennent les données de contexte particulier relatives au contexte particulier d'évaluation des opérateurs.

Lors des étapes 110, 120, 130 le module d'entrée 21 acquiert respectivement les données d'évaluation issues des systèmes transportables 28 d'évaluation, les données de contexte général issues également de ces systèmes transportables 28 d'évaluation et les données de contexte particulier issues de la ou des base(s) de données 30.

Ces étapes 110, 120, 130 peuvent être mises en œuvre par le module d'entrée 21 en parallèle. En variante, au moins certaines de ces étapes sont mises en œuvre de manière consécutive.

À la fin de ces étapes, le module d'entrée 21 transmet les données acquises au module de traitement 22.

Lors de l'étape 140 suivante, le module de traitement 22 met en œuvre la validation des données d'évaluation et des données de contexte général en appliquant un ou plusieurs critères de validation prédéterminés.

Ces critères de validation sont par exemple prédéterminés en fonction de la nature des données dont la validité est étudiée. Le ou chaque critère de validation est choisi dans le groupe comprenant :
- les données acquises qui sont relatives à une évaluation validée (c'est-à-dire l'évaluation est validée par le dispositif transportable d'évaluation 28 ayant collecté les données correspondantes) ;
- les données acquises qui sont relatives à un opérateur identifié (c'est-à-dire l'opérateur a bien été identifié par le système transportable d'évaluation 28 ayant transmis les données correspondantes et un identifiant éventuellement anonymisé est associé à l'opérateur) ;
- les données acquises qui respectent une durée minimale de l'évaluation (la durée minimale de l'évaluation peut être fixée par le système transportable d'évaluation ayant transmis les données correspondantes et peut comprendre par exemple quelques minutes), associées à ces données ;
- les données acquises qui respectent une phase de collecte.

En particulier, en ce qui concerne le respect de la phase de collecte, le module de traitement 22 vérifie que les données reçues correspondent bien à celles devant être collectées/générées lors de la phase de collecte correspondante.

Pour ce faire, le module de traitement 22 peut par exemple vérifier que les natures de données transmises correspondent bien à celles attendues selon la phase de collecte correspondante.

En ce qui concerne la durée minimale d'évaluation, cette durée peut dépendre également de la phase de collecte correspondante.

Par exemple, cette durée peut être inférieure pour la phase initiale de collecte que pour la phase finale de collecte.

Lorsque les données acquises ne sont pas validées selon l'un des critères précités, le module de traitement 22 rejette par exemple ces données de la future considération.

Lors de l'étape 150 suivante, le module de traitement 22 met en œuvre un prétraitement de l'ensemble des données acquises. Le prétraitement est par exemple choisi en fonction de la nature des données acquises.

Ainsi, par exemple, le prétraitement des données de contexte général comprend la mise en œuvre d'au moins l'un des éléments choisis dans le groupe comprenant :
- la définition de la localisation de l'évaluation (par exemple à partir de la configuration ou à partir des coordonnées géographiques de l'évaluation) ;
- la définition de l'heure locale (calculée par exemple en fonction de la localisation de l'évaluation) ;
- l'identification d'une session matinale, normale ou tardive ;
- l'identification du poste occupé par l'opérateur pendant sa mission (par exemple pilote ou co-pilote lorsque la mission de l'opérateur est un vol) ;
- l'extrapolation des informations relatives au sommeil de l'opérateur (par exemple durée de sommeil, les heures de couchée-levée, durée de sieste, chronotype, etc.).

En particulier, en ce qui concerne l'identification de la session matinale, normale ou tardive, les vols matinaux ou tardifs sont définis par la règlementation (par exemple ORO.FTL.105, (i) and ARO.OPS.230). Pour les sessions, on ajoute une marge de deux heures avant le départ du vol (puisque le pilote arrive largement avant le vol) et une heure après l'arrivée du vol. De ce fait, la plage matinale se situe par exemple entre 03h00 et 05h59, et la plage tardive se situe entre 23h00 et 02h59 en heure locale de la localisation de l'opérateur.

Le prétraitement des données d'évaluation comprend par exemple la mise en œuvre d'au moins l'un des éléments choisis dans le groupe comprenant :
- la normalisation du niveau de fatigue (par exemple sur l'échelle de KSS (« Karolinska Sleepiness Scale ») variant de 1 à 9) ;
- la normalisation du niveau de fatigue subjectif (par exemple selon la même échelle de KSS) ;
- l'identification d'une classe de fatigue objective selon le niveau de fatigue objectif ;
- l'identification d'une classe de fatigue subjective selon le niveau de fatigue subjectif (selon par exemple les mêmes classes que celles relatives au niveau de fatigue objectif).

La classification du niveau de fatigue en différentes classes peut s'effectuer par exemple en fonction de la valeur du niveau de fatigue objectif ou subjectif. Le nombre de classes présente par exemple une valeur prédéterminée qui peut par exemple être choisie entre 2 et 10. Ainsi, par exemple, il est possible de choisir uniquement deux classes de fatigue (satisfaisante et insatisfaisante) ou trois classes de fatigue (intermédiaire, élevée, très élevée).

À cet effet, le module de traitement 22 peut par exemple comparer le niveau de fatigue objectif subjectif déterminé et éventuellement normalisé avec des seuils prédéterminés.

Le prétraitement des données du contexte particulier comprend par exemple la détermination d'au moins l'un des éléments choisis dans le groupe comprenant :
- le vol opéré (l'identifiant du vol, l'aéroport de départ, l'aéroport d'arrivée) ;
- les données spécifiques aux sessions d'entrainement (type de mission, durée du vol, l'heure d'atterrissage, vol de nuit) ;
- la période du jour de la mission (les heures exactes et la durée de la mission) ;
- le type d'avion ou tout autre instrument/équipement utilisé pendant la mission ;
- la charge de travail (par exemple le degré de perturbation pendant la mission) ;
- l'activités dans les jours précédant l'évaluation ;
- le retard ou perturbation lors de la mission ;
- les routes opérées.

Certaines de ces données peuvent être extraites ou alors déduites des bases de données 30 telles que définies précédemment.

Par exemple, le type d'avion peut être extrait des données sur les vols commerciaux prévus ou opérés.

Les retards ou perturbations peuvent être extraits des données sur les vols commerciaux réalisés ainsi que les données météo relatives à ces vols.

Les vols opérés peuvent être extraits du planning des équipages associés à l'opérateur correspondant.

Certaines de ces données peuvent servir à construire des données plus élaborées, comme par exemple :
- les routes opérées qui peuvent être issues de l'analyse des vols commerciaux opérés ;
- les retards induits qui peuvent être issus de l'analyse des données sur les vols commerciaux prévus et réalisées.

Lors de l'étape suivante 160, le module de traitement 22 fait une corrélation des données acquises/déterminées lors de différentes phases de collecte relatives au même opérateur.

Par exemple, dans certains cas, il existe des données qui sont acquises ou déterminées uniquement lors de la phase initiale de collecte et certaines autres données qui sont acquises/déterminées uniquement lors de la phase finale de collecte.

Dans un tel cas, le module de traitement 22 va associer ces données en utilisant l'identifiant unique de session associé à chaque type de données et l'identifiant de l'opérateur. Par exemple, lorsque le module de traitement 22 identifie un même identifiant de l'opérateur pour deux identifiants uniques de session correspondant respectivement à une phase initiale de collecte et à une phase finale de collecte, il peut faire une corrélation entre les données collectées lors de ces différentes phases.

Il est de même en ce qui concerne la phase intermédiaire de collecte.

De plus, il est possible de corréler les données issues de plusieurs phases initiales de collecte et de plusieurs phases finales de collecte relatives au même opérateur.

Lors de l'étape suivante 170, le module d'entrée 21 acquiert une plage de temps pour la détermination du niveau de fatigue ainsi qu'un critère de filtrage.

Ces données sont acquises par le module d'entrée 21 suite à l'interaction de l'utilisateur avec l'interface 38.

Cette interaction est effectuée par exemple suite à l'authentification de l'utilisateur via l'interface 38 et la transmission de ces données au module d'entrée 21 via le réseau 35.

La plage de temps par défaut couvre par exemple l'ensemble de sessions. Avantageusement, l'utilisateur a la possibilité de sélectionner dans cette plage couvrant l'ensemble de sessions une sous-plage qui sera alors transmise au module d'entrée 21. Cette plage peut par exemple comprendre des dates spécifiques ou bien une période prédéfinie (semaine précédente, mois précédent, trimestre précédent, semestre précédent, année précédente, etc.).

Le critère de filtrage est par exemple basé sur les données de contexte général et/ou les données de contexte particulier.

Ce critère de filtrage peut comprendre un filtrage simple (par exemple par type de mission ou type d'aéronef) ou alors un filtrage composé (c'est-à-dire plusieurs filtres superposés tels que l'âge de l'opérateur et le type d'aéronef).

À la fin de cette étape 170, le module d'entrée 21 transmet l'ensemble des données acquises au module de traitement 22.

Lors de l'étape 190 suivante, le module de traitement 22 détermine à partir de l'ensemble des données prétraitées un niveau de fatigue statistique selon le critère de filtrage acquis sur la plage de temps acquise.

Ce niveau de fatigue statistique peut alors se présenter sous la forme d'un graphique ou d'un diagramme variant le long de la plage de temps ou représentant différentes valeurs en fonction du critère de filtrage.

Selon certains modes de réalisation, le procédé peut également comprendre une étape 192 qui comprend la détermination d'un nombre d'opérateurs et/ou d'un nombre de routes et/ou d'un nombre d'évaluations correspondant aux données acquises utilisables pour déterminer le niveau de fatigue statistique selon le critère de filtrage choisi.

Autrement dit, lors de cette étape, le module de traitement 22 analyse l'utilisabilité des données acquises pour le critère de filtrage correspondant et en déduit ensuite un nombre représentatif de ces données utilisables.

Ce nombre représentatif peut alors désigner le nombre d'opérateurs qui ont été évalués pour acquérir ces données ou alors le nombre de routes effectuées par ces opérateurs ou le nombre d'évaluations générées par ces opérateurs par les systèmes transportables 28 d'évaluation.

Dans certains modes de réalisation, le module de traitement 22 peut également déterminer un indicateur de confiance associé au niveau de fatigue statistique déterminé en fonction dudit nombre d'opérateurs et/ou des routes et/ou d'évaluations.

Finalement, lors de l'étape 200, le module de sortie 23 transmet le niveau de statistique déterminé avec éventuellement l'indicateur de confiance associé à l'interface 38 pour être affiché sous une forme appropriée.

Cette forme appropriée peut être choisie par l'utilisateur en fonction par exemple de la nature du critère de filtrage.

Il sera décrit par la suite quelques exemples d'application du procédé selon l'invention en fonction de différents critères de filtrage.

Selon un premier exemple d'application du procédé, le critère de filtrage consiste à un filtrage du niveau de fatigue objectif/subjectif statistique après la phase initiale de collecte (check-in) et après la phase finale de collecte (check-out).

Dans un tel exemple, le module de traitement 22 calcule lors des étapes 190 et 192 décrites précédemment les valeurs suivantes :
- le nombre de sessions : c'est le nombre de sessions sur la plage de temps acquise ;
- le nombre d'opérateurs : c'est le nombre d'opérateurs différents ayant réalisé des sessions sur la plage de temps acquise ;
- le nombre de routes : c'est le nombre de routes différentes opérées lors des sessions sur la plage de temps acquise. Il s'agit par exemple d'un paramètre optionnel calculé lors desdites étapes ;
- les niveaux de fatigue objectifs lors de la phase initiale de collecte (check-in) : les niveaux de fatigue calculés par les systèmes transportables 28 d'évaluation sont par exemple classés en plusieurs classes (par exemple en trois classes telles que définies précédemment) ;
- les niveaux de fatigue objectifs lors de la phase finale de collecte (check-out) : de manière analogue, il s'agit ici de la classification des niveaux de fatigue objectifs calculés en plusieurs classes (par exemple en trois classes) ;
- les niveaux de fatigue subjectifs lors de la phase initiale de collecte (check-in) : idem, classification en plusieurs classes (par exemple en trois classes) ;
- les niveaux de fatigue subjectifs lors de la phase finale d'évaluation (check-out) : idem ici classification en plusieurs classes (par exemple en trois classes).

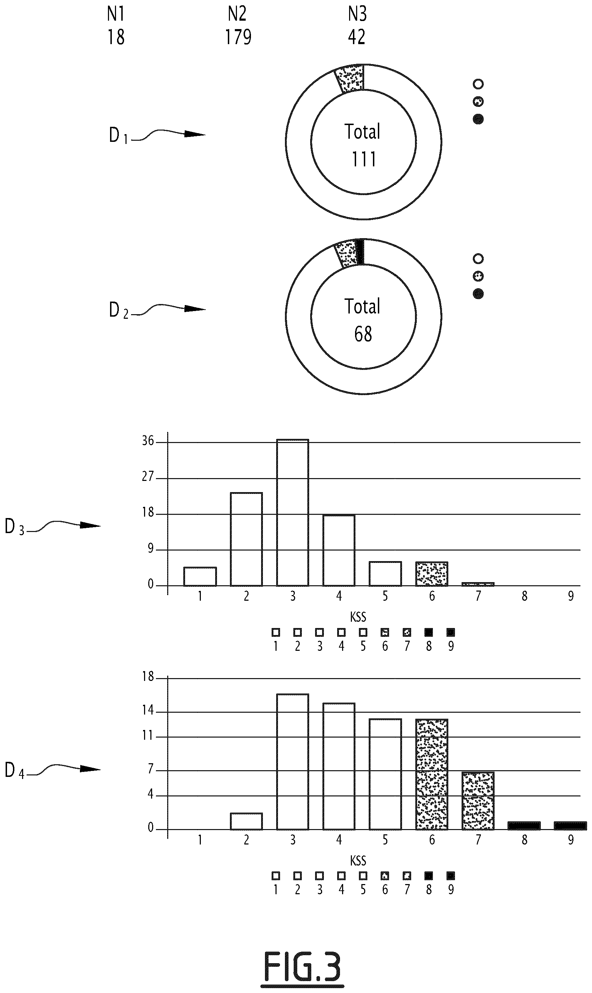

La figure 3 illustre un exemple d'affichage obtenu suite à la mise en œuvre de cet exemple.

Ainsi, comme cela est représenté sur la figure 3, l'affichage comprend tout d'abord l'affichage de trois valeurs N1, N2 et N3 qui correspondent respectivement au nombre d'opérateurs, au nombre de sessions et au nombre de routes calculés par le module de traitement 22.

L'affichage comprend en outre quatre diagrammes D1, D2, D3 et D4. Le diagramme D1 présente la classification du niveau de fatigue objectif statistique des opérateurs lors de la phase initiale de collecte (check-in).

Le diagramme D2 présente la classification du niveau de fatigue objectif statistique lors de la phase finale de collecte (check-out).

Le diagramme D3 présente la classification du niveau de fatigue subjectif statistique des opérateurs lors de la phase initiale de collecte (check-in).

Enfin, le diagramme D4 présente la classification du niveau de fatigue subjectif lors de la phase finale de collecte (check-out).

Comme cela est illustré sur cette figure 3, la forme et le type de diagramme peut varier en fonction du critère de filtrage choisi.

Par ailleurs, l'utilisateur a également la possibilité de choisir le type de diagramme souhaité.

Enfin, il est également possible d'appliquer un critère de filtrage supplémentaire sur les diagrammes déjà affichés.

Ainsi, par exemple, il est possible d'affiner ces valeurs par exemple par type d'avion, par rôle de l'opérateur lors de la mission, par type de mission, etc.

Selon un deuxième exemple d'application, le critère de filtrage peut comprendre en outre la classification du niveau de fatigue statistique lors de la mission des opérateurs.

Pour ce faire, le module de traitement 22 peut par exemple découper la mission en une pluralité de tronçons et ensuite, déterminer le niveau de fatigue statistique pour chacun des tronçons.

Ainsi, par exemple, lorsque l'opérateur est un pilote ou un co-pilote, il est possible de découper sa mission (i.e. vol) en trois tronçons de longueurs identiques ou alors en tronçons basés sur des points caractéristiques de la mission comme par exemple la fin de montée, croisière, après le début de la descente.

Dans un tel cas, l'information sur le niveau de fatigue dans chacun des tronçons présente une valeur moyenne du niveau de fatigue calculé en continu dans ces tronçons.

Selon un troisième exemple d'application, le niveau de fatigue statistique est calculé pour différentes catégories d'opérateurs.

Ces catégories sont déterminées par exemple en fonction du genre de l'opérateur, de la fonction de l'opérateur lors de sa mission, de sa tranche d'âge, etc.

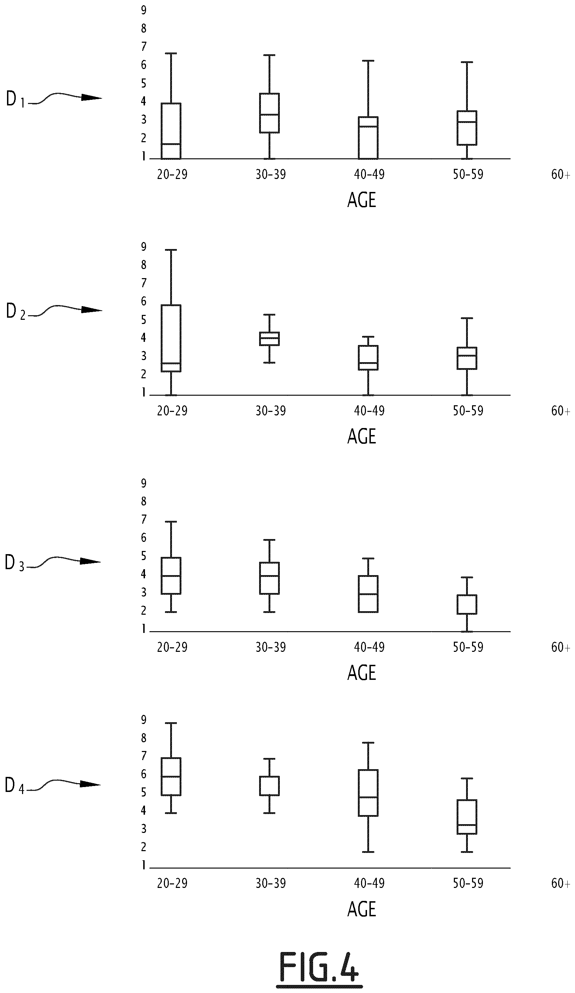

La figure 4 illustre un exemple d'un tel affichage pour les différentes catégories d'opérateurs.

Dans cet exemple, les catégories d'opérateurs sont formées par tranche d'âge.

Ainsi, par exemple, le module de traitement 22 dans ce cas calcule cinq catégories d'opérateurs par tranche d'âge. Ces catégories comprennent une première tranche allant de 20 à 29 ans, une deuxième tranche pour les âges allant de 30 à 39 ans, une troisième tranche pour les âges allant de 40 à 49 ans, une quatrième tranche pour les âges allant de 50 à 59 ans, et une cinquième tranche pour les âges de plus de 60 ans.

De plus, les différentes catégories peuvent être calculées pour les différents types de niveau de fatigue et pour les différentes phases de collecte.

Ainsi, la figure 4 illustre les diagrammes D1 à D4 calculés pour lesdites tranches d'âge.

Le diagramme D1 correspond au niveau de fatigue objectif statistique calculé par tranche d'âge lors de la phase initiale d'évaluation, le diagramme D2 correspond au niveau de fatigue objectif statistique par tranche d'âge calculé lors de la phase finale d'évaluation, le diagramme D3 correspond au niveau de fatigue subjectif statistique par tranche d'âge calculé lors de la phase initiale de collecte et le diagramme D4 correspond au niveau de fatigue subjectif de collecte par tranche d'âge calculé lors de la phase finale de collecte.

Chacun de ces diagrammes inclut sur l'axe horizontal la tranche d'âge correspondant et sur l'axe vertical le niveau de fatigue statistique correspondant calculé sur une échelle variant par exemple de 1 à 9.

Selon un quatrième exemple d'application, le niveau de fatigue statistique est calculé par catégorie de mission.

Une telle catégorie de mission peut par exemple comprendre le nombre de jours consécutifs de mission.

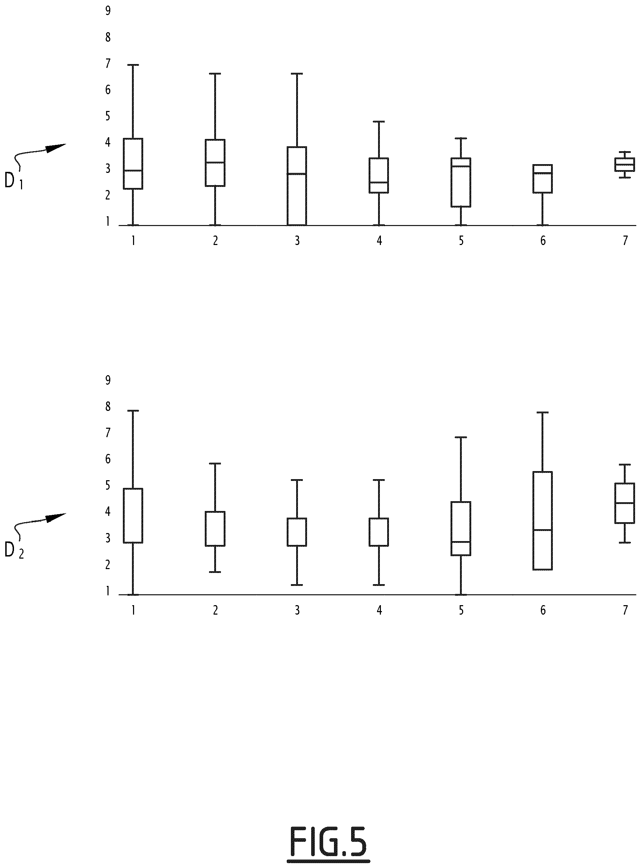

La figure 5 illustre un exemple d'affichage d'un tel niveau de fatigue statistique.

Selon cet exemple, la catégorisation se fait selon huit catégories correspondant au nombre de jours consécutifs de mission.

Ainsi, la figure 5 illustre le diagramme D1 et le diagramme D2 correspondant respectivement au niveau de fatigue objectif statistique et au niveau de fatigue subjectif statistique en fonction du nombre de jours consécutifs de mission.

Bien entendu, de nombreux autres exemples de critères de filtrage et de superposition de différents filtres sont également possibles.

On conçoit alors que la présente invention présente un certain nombre d'avantages.

Tout d'abord, la solution proposée consiste en la mise en œuvre d'un procédé permettant de représenter la fatigue objective ou subjective de manière statistique sur une plage de temps, selon différents points de vue.

En effet, la solution permet de présenter la fatigue en faisant un focus sur certains points du contexte capturés lors des évaluations.

La solution proposée a l'avantage de s'appuyer sur un état de fatigue objectif ou subjectif contextualisé et requis sur une population sur une plage de temps large et non sur un état fatigue subjectif ou ponctuel souvent décorrélé de son contexte.

Ainsi, l'invention permet d'avoir une vue synthétique globale sur la fatigue statistique des opérateurs et permet ainsi de planifier les missions en prenant en compte de manière efficace cette fatigue.

## Revendications

1. Procédé de détermination d'un niveau de fatigue statistique relatif à une population d'opérateurs, comprenant les étapes suivantes :
- acquisition (110) d'une pluralité de données d'évaluation des opérateurs déterminées à partir de données physiologiques des opérateurs ;
- acquisition (120) d'une pluralité de données de contexte général relatives au contexte général d'évaluation des opérateurs ;
- acquisition (130) d'une pluralité de données de contexte particulier relatives au contexte particulier d'évaluation des opérateurs ;
- prétraitement (150) de l'ensemble des données acquises ;
- acquisition (170) d'une plage de temps pour détermination du niveau de fatigue statistique et acquisition (170) d'un critère de filtrage, le critère de filtrage étant basé sur les données de contexte général et/ou les données de contexte particulier ;
- détermination (190) à partir de l'ensemble des données prétraitées d'un niveau de fatigue statistique selon le critère de filtrage acquis sur la plage de temps acquis.

2. Procédé selon la revendication 1, comprenant en outre une étape (200) de transmission du niveau de fatigue statistique déterminé pour affichage par une interface d'affichage (38).

3. Procédé selon la revendication 1 ou 2, comprenant en outre une étape (140) de validation des données d'évaluation et des données de contexte général selon un ou plusieurs critères de validation prédéterminés.

4. Procédé selon la revendication 3, dans lequel le ou chaque critère de validation est choisi dans le groupe comprenant :
- les données acquises sont relatives à une évaluation validée ;
- les données acquises relatives à un opérateur identifié ;
- les données acquises respectent une durée minimale de l'évaluation ;
- les données acquises respectent une phase de collecte, chaque phase de collecte étant choisie parmi une phase initiale de collecte mise en œuvre avant la mission, une phase intermédiaire de collecte mise en œuvre pendant la mission et une phase finale de collecte mise en œuvre après la mission.

5. Procédé selon l'une quelconque des revendications précédentes, dans lequel les données de contexte général comprennent au moins un type de données choisi dans le groupe comprenant :
- données relatives à l'environnement de l'opérateur ;
- données physiologiques de l'opérateur.

6. Procédé selon la revendication 5, dans lequel le prétraitement des données de contexte général comprend la mise en œuvre d'au moins l'un des éléments choisi dans le groupe comprenant :
- définition de la localisation de l'évaluation ;
- définition de l'heure locale ;
- identification d'une session matinale, normale ou tardive ;
- identification du poste occupé par l'opérateur ;
- extrapolation des informations relatives au sommeil de l'opérateur.

7. Procédé selon l'une quelconque des revendications précédentes, dans lequel les données d'évaluation comprennent au moins un type de données choisi dans le groupe comprenant :
- niveau de fatigue objectif de l'opérateur ;
- niveau de fatigue subjectif de l'opérateur.

8. Procédé selon la revendication 7, dans lequel le prétraitement des données d'évaluation comprend la mise en œuvre d'au moins l'un des éléments choisi dans le groupe comprenant :
- normalisation du niveau de fatigue objectif ;
- normalisation du niveau de fatigue subjectif ;
- identification d'une classe de fatigue objective selon le niveau de fatigue objectif ;
- identification d'une classe de fatigue subjective selon le niveau de fatigue subjectif.

9. Procédé selon l'une quelconque des revendications précédentes, dans lequel les données de contexte particulier comprennent au moins un type de données choisi dans le groupe comprenant :
- données relatives à la mission à effectuer par l'opérateur ;
- données relatives à la (aux) mission(s) effectuée(s) par l'opérateur ;
- données opérationnelles relatives à des activités effectuées par l'opérateur autres qu'une mission.

10. Procédé selon la revendication 9, dans lequel le prétraitement des données de contexte particulier comprend la détermination d'au moins l'un des éléments choisi dans le groupe comprenant :
- vol(s) opéré(s) ;
- données spécifiques aux sessions d'entrainement ;
- période du jour de la mission ;
- type d'avion ;
- charge de travail ;
- degré de perturbations dans l'activité ;
- activités dans les jours précédant l'évaluation ;
- retards ou perturbations lors de(s) mission(s) ;
- routes opérées.

11. Procédé selon l'une quelconque des revendications précédentes, comprenant en outre une étape de corrélation (160) de données acquises/déterminées lors de différentes phases de collecte relatives à un même opérateur, chaque phase de collecte étant choisie parmi une phase initiale de collecte mise en œuvre avant la mission, une phase intermédiaire de collecte mise en œuvre pendant la mission et une phase finale de collecte mise en œuvre après la mission ;
avantageusement, l'étape de corrélation (160) comprenant l'identification d'un même identifiant de l'opérateur pour au moins deux identifiants de session associés auxdites données acquises/déterminées, correspondant à des phases de collecte différentes.

12. Procédé selon l'une quelconque des revendications précédentes, comprenant en outre pour le critère de filtrage acquis, une étape (192) de détermination d'un nombre d'opérateurs et/ou d'un nombre de routes et/ou d'un nombre d'évaluations correspondant aux données acquises utilisables pour déterminer le niveau de fatigue statistique selon ce critère de filtrage.

13. Procédé selon la revendication 12, dans lequel l'étape de détermination (190) du niveau de fatigue statistique comprend en outre la détermination d'un indicateur de confiance associé au niveau de fatigue statistique déterminé, l'indicateur de confiance étant déterminée en fonction dudit nombre d'opérateurs et/ou de routes et/ou d'évaluations.
